# FASCICULE DE BREVET EUROPEEN

(11) **EP 3 127 252 B1**
(45) Date de publication et mention de la délivrance du brevet: **02.01.2019**
(21) Numéro de dépôt: 15712937.0
(22) Date de dépôt: 31.03.2015
(51) Int. Cl.: H04B 7/185, B64D 45/00, G07C 5/00, H04L 29/00

(54) **PROCÉDÉ DE TRANSMISSION DE DONNÉES DE VOL ENREGISTRÉES PAR UNE BOÎTE NOIRE D'UN AÉRONEF PAR UN FAISCEAU RADIOÉLECTRIQUE DONT LA DIRECTIVITÉ CHANGE SI UN ÉTAT CRITIQUE DE L'AVION EST DÉTECTÉ.**
VERFAHREN ZUR ÜBERTRAGUNG VON FLUGDATEN AUFGEZEICHNET MIT EINEM SCHWARTZEN KASTEN IN EINEM FLUGZEUG DURCH SENDUNG EINES FUNKSTRAHLS DESSEN RICHTUNG SICH ÄNDERT NACH EINER ERKENNUNG EINES KRITISCHEN ZUSTANDS DES FLUGZEUGS.
METHOD OF TRANSMITTING FLIGHT DATA RECORDED BY A BLACK BOX IN AN AIRCRAFT BY EMITTING A RADIO BEAM WHOSE DIRECTION CHANGES IF A CRITICAL CONDITION OF THE AIRCRAFT IS DETECTED.

(30) Priorité: 31.03.2014 FR 1452784
(43) Date de publication de la demande: 08.02.2017
(73) Titulaire: Safran Electronics & Defense, 92100 Boulogne-Billancourt (FR)
(72) Inventeur: CHIODINI, Alain, F-92100 Boulogne-Billancourt (FR); DELVILLE, Denis, F-92100 Boulogne-Billancourt (FR); RIVIERE, Philippe, F-92100 Boulogne-Billancourt (FR)
(74) Mandataire: Regimbeau
(86) Numéro de dépôt international: PCT/EP2015/056996
(87) Numéro de publication internationale: WO 2015/150369

(56) Documents cités:
- FR-A1- 2 967 542
- US-A1- 2003 135 311
- US-A1- 2011 032 149
- US-A1- 2013 244 588

## Description

### DOMAINE GENERAL

L'invention se rapporte au domaine des enregistreurs de vol embarqués sur des aéronefs et communément désignés sous le terme de « boîtes noires ».

L'invention concerne plus particulièrement un procédé de transmission en vol de données de vol du type de celles collectées par ces enregistreurs.

### ETAT DE L'ART

En accord avec la réglementation aérienne, les aéronefs sont équipés aujourd'hui des dispositifs permettant de collecter et mémoriser des données de vol ainsi que les communications audio. Ces dispositifs sont habituellement désignés sous le terme de « enregistreur de vol », ou « boîtes noires » ou « crash recorders » en langue anglaise. Dans le cas d'un incident, voire d'un accident d'un aéronef, le contenu de ses enregistreurs de vol est typiquement analysé au sol de façon à déterminer l'origine de l'incident ou de l'accident survenu à l'aéronef.

Les enregistreurs de vol réglementaires se doivent donc d'être exceptionnellement résistants (supporter typiquement des températures de l'ordre de 1500 degrés, des accélérations de 3000g, ...), être capables d'enregistrer des données volumineuses et occuper un espace limité et un poids réduit.

Toutefois, ces enregistreurs demeurent destructibles et peuvent ne pas être récupérables après un accident d'un aéronef en pleine mer.
Pour contourner ces problèmes, il a été déjà été proposé des procédés de transmission de données ordinairement collectées par les enregistreurs de vol depuis un premier aéronef en vol vers un deuxième aéronef en vol. Les données sont transmises d'aéronef en aéronef jusqu'à atteindre une station de stockage au sol. On connaît par exemple du document US 2013/0244588 un procédé de transmission en vol de données enregistrées par une boîte noire d'un aéronef, le procédé comprenant l'émission par l'aéronef d'un faisceau radioélectrique dont la bande-passante et les données qu'il transporte varient en fonction de la valeur d'un paramètre.

FR2967542 décrit la transmission des données d'une boîte noire selon l'état d'un aéronef vers un ou plusieurs aéronefs.

### PRESENTATION DE L'INVENTION

L'invention vise donc à offrir différentes stratégies de transmission en vol, d'aéronef à aéronef, de données enregistrées par une boîte noire.

Il est dès lors proposé un procédé de transmission en vol de données enregistrées par une boîte noire d'un aéronef, le procédé comprenant l'émission par l'aéronef d'un faisceau radioélectrique transportant lesdites données selon une première directivité si au moins un paramètre prédéterminé n'indique pas un état critique de l'aéronef, et selon une deuxième directivité différente la première directivité si le paramètre prédéterminé indique un état critique de l'aéronef.

Le faisceau radioélectrique émis par la mise en oeuvre de ce procédé se propage depuis l'aéronef dans un secteur angulaire de l'espace qui est déterminé par la directivité choisie pour l'émission.

Un ajustement selon une faible directivité permettra une propagation des données dans un secteur angulaire large, et donc de transmettre les données correctement à davantage d'aéronefs localisés à des positions angulaires éloignées les unes des autres, par rapport à l'aéronef émetteur des données.

Au contraire, un ajustement selon une grande directivité permettra une propagation des données dans un secteur angulaire plus étroit (on parle alors de propagation directionnelle). Une telle propagation directionnelle permet d'accroître la portée radioélectrique, autorise l'utilisation de modulations d'ordre supérieur (64-QAM plutôt que BPSK par exemple) pour transmettre un plus grand volume de données, et de diminuer le niveau d'interférences co-canal.

Le procédé proposé est donc particulièrement flexible car il autorise plusieurs stratégies d'émission de données de type boîte noire en adaptant les conditions de propagation des données en fonction de la situation interne (état de l'aéronef) et/ou externe (conditions météorologiques influant sur la qualité de la transmission des données).

Dans un mode de réalisation, la deuxième directivité est plus petite que la première directivité. Il est ainsi privilégié dans une situation critique de l'aéronef, relativement rare, une stratégie de secours visant à atteindre davantage d'aéronefs destinataires, et dans une situation de bon fonctionnement de l'aéronef, plus fréquente, une stratégie de transmission directionnelle focalisée, plus économe en énergie.

L'émission du faisceau radioélectrique selon la première directivité peut être mise en oeuvre en réponse à la détection de la position d'un autre aéronef en vol à portée radioélectrique, le faisceau radioélectrique émis étant alors orienté vers la position détectée. Les données de type boîte noire sont alors émises uniquement lorsque cela s'avère utile, c'est-à-dire uniquement lorsqu'un aéronef destinataire est identifié comme destinataire, ce qui permet de diminuer encore la consommation d'énergie dédiée à la transmission desdites données. Par ailleurs, la directivité peut alors être ajustée à une valeur réduire dans la mesure où le faisceau est dirigé vers l'aéronef destinataire.

L'émission du faisceau radioélectrique selon la deuxième directivité peut en outre être avantageusement répétée dans le temps, par exemple jusqu'à l'atterrissage de l'aéronef.

Par ailleurs, l'émission du faisceau radioélectrique selon la deuxième directivité peut être omnidirectionnelle, de façon à émettre à 360° dans l'espace libre et ainsi augmenter les chances de bonne transmission des données à tous les aéronefs à portée, connus ou non connus de l'aéronef émetteur.

Le faisceau radio peut être également émis selon une première puissance si le paramètre n'indique pas un état critique, et selon une deuxième puissance plus grande que la première puissance si le paramètre indique un état critique.

Le paramètre déterminé peut en outre être émis dans le faisceau radioélectrique (F1, F2).

Par ailleurs Le faisceau radioélectrique émis peut être généré par :
- activation d'un ensemble d'antennes (A1-An) de l'aéronef, si le paramètre n'indique pas un état critique de l'aéronef, et
- activation sélective d'un sous-ensemble (Ai) de l'ensemble d'antennes, si le paramètre indique un état critique l'aéronef.

Chaque antenne activée génère alors un signal radioélectrique qui contribue à former le faisceau radioélectrique.

Chaque antenne peut être une antenne omnidirectionnelle.

Chaque signal radioélectrique généré par une antenne activée peut transporter une copie des mêmes données enregistrées par la boîte noire si le paramètre indique un état critique l'aéronef. Alternativement, le procédé comprend une décomposition des données enregistrées par la boîte noire en plusieurs flux de données, et chaque antenne génère un signal radioélectrique transportant l'un des flux de données si le paramètre indique un état critique l'aéronef.

Chaque signal radioélectrique généré par une antenne peut en outre être émis dans un canal fréquentiel distinct.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un aéronef selon un mode de réalisation de l'invention.
- La figure 2 est un organigramme d'étapes d'un procédé de transmission de données selon un mode de réalisation de l'invention.
- Les figures 3 et 4 représentent l'aéronef de la figure 1 dans deux situations de vol.

Sur l'ensemble des figures, les éléments similaires portent des références identiques.

### DESCRIPTION DETAILLEE DE L'INVENTION

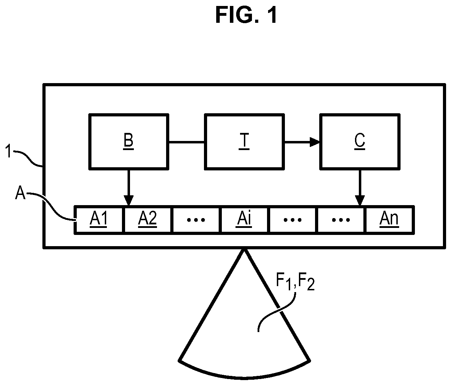

En référence à la figure 1, un aéronef 1 comprend un enregistreur de vol B, un module de traitement T, un module de contrôle C, et un émetteur A de faisceaux radioélectriques.

L'enregistreur B, ou « boîte noire », est un dispositif bien connu adapté pour collecter et stocker des données représentatives des conditions de vol de l'aéronef 1.

On désignera ici par l'expression « données de vol » des données collectées par l'enregistreur de vol, par exemple les données réglementaires de vol permettent d'émettre un diagnostic sur les conditions de vol de l'aéronef 1.

L'enregistreur de vol peut d'une part être adapté pour enregistrer la phonie : quatre voies « audio » sont enregistrées (pilote, copilote, ambiance à bord de la cabine et conversations avec le contrôle aérien). L'enregistrement doit permettre de restituer les deux dernières heures précédant un accident.

Une voie audio a typiquement un débit binaire maximum de 32 Kbit/s, le volume de données produit par seconde est alors de : 4 voies audio fois 32 Kbit/s + 1 voie données fois 2 Kbit/s = 130 Kbit/s soit 468 Mbit par heure.

Les données audio sont acquises sur des lignes analogiques audio.

L'enregistreur de vol B peut d'autre part être adapté pour enregistrer des données : une voie « données » est enregistrée. Jusqu'à 88 paramètres peuvent être sauvegardés (dont certains sont l'accélération verticale ou IVV, pour « Inertial Vertical Velocity », par exemple, à la cadence de 16 Hz) ce qui représente de l'ordre de 1024 données de 12 bits (étendues à 16 bits) par seconde; le débit binaire correspondant est donc de 2 K octets par seconde. L'enregistrement peut être prévu pour restituer les vingt-cinq dernières heures précédant un accident.

L'enregistreur de vol B comprend typiquement une mémoire de masse de type mémoire FLASH. L'information est partagée circulairement entre plusieurs composants de mémoires distinctes.

Les données (paramètres de vol) sont acquises par l'intermédiaire d'une liaison série et envoyées vers l'enregistreur de vol B au moyen d'une modulation de type PCM.

L'enregistreur de vol B peut aussi être adapté pour enregistrer à la fois la phonie et les données de vol.

Le module de diagnostic T est relié à l'enregistreur de vol B. Il peut être configuré pour analyser les données collectées par l'enregistreur de vol B et en déduire ou plusieurs paramètres indiquant si l'aéronef est dans un état critique ou non. En variante, le paramètre précité fait partie des données collectées par l'enregistreur de vol B et aucune déduction n'est effectuée par le module de diagnostic T.

On entend dans le présent texte par « état critique » un état correspondant à une situation catastrophique pour l'aéronef, au sens de la réglementation aérienne. L'aéronef 1 peut entrer dans un état critique dans plusieurs cas : si un ou plusieurs équipements de l'aéronef sont sujets à une avarie (état d'avarie) et/ou dans le cas d'une erreur de pilotage (état d'erreur de pilotage).

On pourrait, en particulier, mais pas exclusivement, utiliser comme paramètre, utilisé par le module de diagnostic T, un paramètre d'alarme du cockpit, tel qu'une alarme sonore (alarme décrochage, alarme feux, etc.), une alarme lumineuse (« master warning »). On pourrait aussi réaliser des logiques spécifiques pour identifier l'état critique de l'aéronef 1.

L'émetteur A est adapté pour émettre un signal radioélectrique formant un faisceau dans l'espace et adaptés pour recevoir un tel faisceau.

L'émetteur A est adaptatif, c'est-à-dire qu'il présente au moins un paramètre de fonctionnement variable comprenant au moins la directivité de l'émetteur A en émission radioélectrique.

Dans la suite, le terme « directivité » désigne un paramètre de fonctionnement de l'émetteur A qui détermine un angle du secteur angulaire de l'espace (ou au moins dans un plan tel que le plan azimutal de l'aéronef) dans lequel le faisceau radioélectrique émis se propage. Plus la directivité des moyens d'émission A est petite, plus l'angle du secteur angulaire du faisceau est grand.

Les paramètres de fonctionnement peuvent également comprendre la puissance d'émission globale du faisceau radioélectrique généré par l'émetteur A.

Le module de contrôle C est configuré pour ajuster les paramètres de fonctionnement de l'émetteur A en fonction de la valeur du ou des paramètres obtenus par le module de diagnostic T.

L'aéronef peut également comprendre des moyens de cryptage des données collectées.

### Procédé de transmission de données

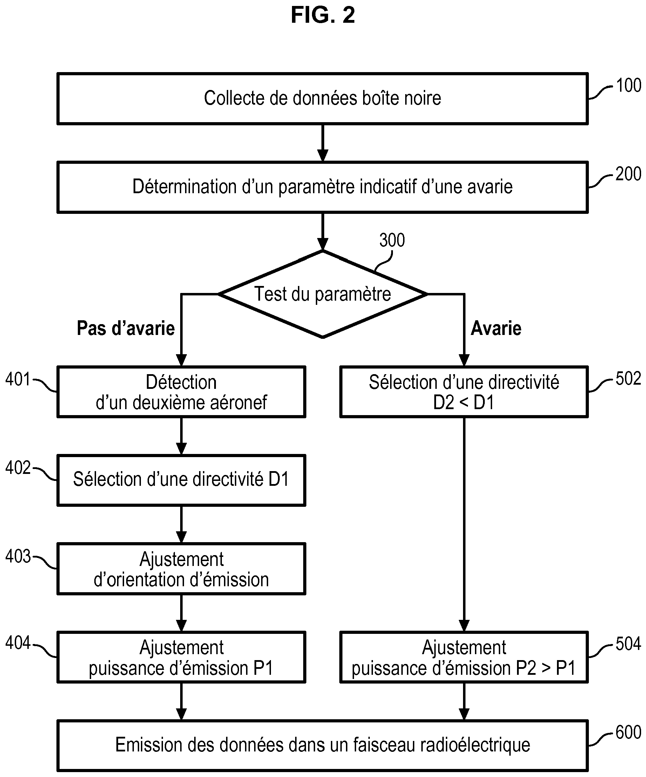

Vont maintenant être décrites les différentes étapes d'un procédé de transmission de données de type boîte noire de l'aéronef 1 en référence à l'organigramme de la **figure 2**.

Dans une étape 100, l'enregistreur de vol B collecte des données de vol de l'aéronef 1. Cette étape peut typiquement être réalisée continûment pendant le vol de l'aéronef 1.

Dans une étape 200, au moins un paramètre indicatif d'un état critique de l'aéronef est déterminé par le module de diagnostic T à partir des données transmises à l'enregistreur de vol B. Chaque paramètre déterminé peut être indicatif d'un état critique relatif à l'aéronef. On pourrait par exemple considérer que l'aéronef subit un état critique si au moins un paramètre indique une « situation catastrophique ».

Dans une étape 300, le module de diagnostic teste la valeur du paramètre déterminé. Ce paramètre peut typiquement être un booléen prenant une valeur OK indicative de l'absence d'un état critique ou bien une valeur NOK indicative de la présence d'un état critique.

En variante, dans cette étape 300, le module T met en oeuvre, à partir de la surveillance des données qui sont enregistrées dans l'enregistreur de vol, la détection de cette condition d'état critique au moyen d'un programme informatique dédié ayant accès au contenu de l'enregistreur de vol B.

### Cas de l'absence d'un état critique

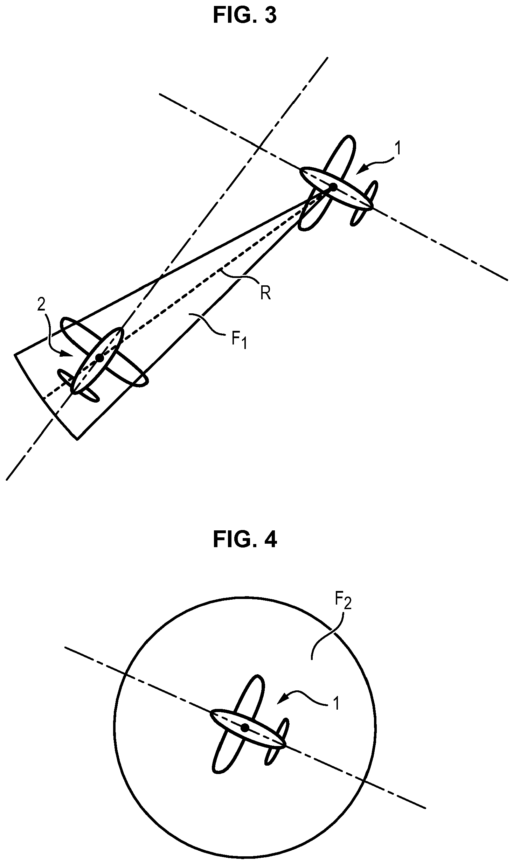

Si le paramètre testé indique que l'aéronef n'est pas sujet à un état critique, une étape de détection 401 de la position d'un deuxième aéronef 2 à portée de l'émetteur A est mise en oeuvre (cette situation est illustrée sur la **figure 3**).

Cette étape de détection 401 peut être mise en oeuvre de diverses manières connues de l'homme du métier. Par exemple, la trajectoire d'un aéronef est typiquement déterminée avant son décollage. On supposera par ailleurs, que l'aéronef 1 dispose de moyens lui permettant de connaître une nouvelle trajectoire si cet aéronef se trouve pour une raison ou pour une autre détourné de sa trajectoire initialement prévue.

Il peut donc être déterminé à l'avance un nombre d'aéronefs 2 croisant la trajectoire de l'aéronef 1. Il peut donc également être estimé une estimation de la distance minimale qui séparera les aéronefs 1 et 2 pendant leurs vols respectifs, ainsi que qu'une estimation de l'instant auquel cette distance minimale survient.

La détection 401 peut être mise en oeuvre dynamiquement au moyen d'une pluralité d'antennes omnidirectionnelles décrites plus loin dans le présent document. Des algorithmes de traitement numérique classiques comme MUSIC (« Multiple Signal Classification ») et/ou ESPRIT (« Estimation of Signal Parameters via Rotational Invariance Techniques ») peuvent être utilisés avec succès dans ce cas. L'estimation de la direction de l'aéronef émetteur est d'autant plus précise que la réponse impulsionnelle du canal de transmission est simple, les aéronefs étant en en visibilité directe sans (ou peu de) multi-trajets.

Si plusieurs aéronefs 2 sont détectés 401, l'aéronef destinataire des données peut être sélectionné sur la base d'une métrique comprenant par exemple la force du signal reçu (RSSI) et/ou une estimation de la durée potentielle de transmission.

En variante, la détection 401 peut alors être mise en oeuvre par scrutation d'une table stockée par l'aéronef 1, la table comprenant une période de croisement par l'aéronef 2 au cours de laquelle l'aéronef 1 est à portée de l'aéronef 2, émission d'une requête par l'aéronef 1 lors de l'entrée dans ladite période de croisement, et la réception d'une réponse de position de l'aéronef 2 émise par celui-ci en réponse à la requête.

Une fois la position du deuxième aéronef 2 détectée par l'aéronef 1, le module de contrôle C ajuste la directivité globale en émission de l'émetteur A à une valeur D1, par exemple prédéterminée par le module de contrôle C. On considérera que la directivité D1 est choisie de façon à produire un faisceau directionnel F1, par opposition à un faisceau omnidirectionnel F2 se propageant à 360° dans le plan azimutal de l'aéronef.

Dans une étape 403, le module de contrôle C ajuste également l'orientation de la direction de l'émetteur A (cette direction est illustrée sur la figure 3 par la ligne en pointillée joignant les positions respectives des deux aéronefs 1 et 2).

Les étapes 401 et 403 peuvent être répétées plusieurs fois de façon à mettre à jour la position relative de l'aéronef 2 par rapport à l'aéronef 1 qui est mobile.

Dans une étape 404, le module de contrôle C ajuste la puissance d'émission des moyens de communications à une valeur P1.

Dans une étape 600, l'émetteur A émet un faisceau radioélectrique F1 transportant toute ou partie des données collectées par l'enregistreur de vol B.

En pratique, le faisceau F1 forme une « bulle » radioélectrique dont l'étendue dépend de la puissance rayonnée).

Le faisceau F1 couvre un secteur angulaire relativement étroit correspondant à la directivité D1, ce qui permet d'améliorer les conditions de transmission des données vers cet aéronef. Le faisceau F1 est émis en direction de la position de l'aéronef 2, ce qui permet d'économiser de la puissance en émission.

Les aéronefs 1 et 2 sont physiquement capables d'échanger des données lorsqu'ils sont tous les deux situés dans l'espace formé par l'intersection de leurs « bulles » radioélectriques respectives. Lorsqu'un tel événement survient, on dit que les aéronefs se « croisent ». Lorsque les deux aéronefs 1 et 2 se croisent selon des directions opposées, la durée minimale T de la période de communication possible entre ces deux aéronefs 1, 2 est T = 2R /(V1 + V2), où V1 est la vitesse de l'aéronef 1, V2 la vitesse de l'aéronef 2, et R le rayon de leurs « bulles » respectives (qui est ici supposé être le même).

Les données sont ensuite reçues par des moyens de réception (non-illustrés) de l'aéronef 2.

Ces données collectées par l'aéronef 2 pourront ensuite faire l'objet d'une analyse des conditions de vol de l'aéronef 1, si celui-ci connait plus tard un état critique voire un accident.

Si on suppose que R = 30 km et que V1 = V2 = 900 km/h, alors T = 120 s. Le débit binaire minimum utilisé lors de l'émission radioélectrique peut alors être supérieur ou égal à 3,9 Mbit/s, ce qui est tout à fait compatible avec les performances des standards OFDM existants (DVB par exemple) ou de la norme de téléphonie de 4ème génération (LTE-Advanced).

Si l'aéronef 1 également est adapté pour recevoir des données collectées par l'enregistreur de vol de l'aéronef 2 (émises par mise en oeuvre du procédé présentement décrit), le débit binaire minimum est porté à 7,8 Mbit/s (si les aéronefs 1 et 2 émettent leurs données respectives l'un après l'autre), ce qui reste avantageusement compatible avec les performances des standards évoqués ci-dessus.

Toutefois, dans la pratique, un débit binaire minimum de 2 Mbit/s est amplement suffisant pour transmettre les données de type boîte noire.

### Cas de la présence d'un état critique

Si le paramètre indique un état critique de l'aéronef, une procédure spéciale de transmission est mise en oeuvre, comprenant les étapes suivantes.

Dans une étape 502, le module de contrôle C ajuste la directivité de l'émetteur A à une valeur D2 inférieure à la valeur D1 choisie dans le cas de bon fonctionnement de l'appareil précédemment décrit.

Dans une étape 504, le module de contrôle C ajuste la puissance d'émission des moyens de communications à une valeur P2 avantageusement choisie supérieure à la puissance P1, de façon à augmenter la portée.

L'étape d'émission 600 est ensuite mise en oeuvre pour transmettre toute ou partie des données collectées par l'enregistreur de vol B dans un faisceau radioélectrique F2 couvrant un secteur angulaire plus grand que celui du faisceau F1.

L'avarie pourra ensuite être analysée sur la base des données reçues par l'aéronef 2 après leur transmission ; il est donc avantageux que toutes les données collectées par l'enregistreur de vols soient émises par les moyens de communications A.

De préférence, la valeur D2 est une valeur minimale permettant une propagation omnidirectionnelle. Les données ainsi propagées à 360° sont donc davantage susceptibles d'être captées par un autre aéronef, même un aéronef n'ayant pas fait l'objet d'une détection 401, détection qui peut en effet être sélective, voire justement être affectée par l'avarie à laquelle l'aéronef 1 est sujet.

Par ailleurs, la puissance P2 choisie supérieure à la puissance P1 permet d'augmenter la portée de l'aéronef 1. En conséquence, les données émises peuvent être captées par des aéronefs 2 qui ne sont pas atteignables lorsque l'émetteur A est configuré avec la puissance d'émission P1. De plus, utiliser une puissance P2 relativement élevée seulement lorsque l'aéronef subit un état critique permet de réduire la consommation électrique des moyens de communications A, et donc celle de l'aéronef 1.

L'émission des données est ici avantageusement effectuée dans le cas de la présence d'un état critique sans attendre de détecter un deuxième aéronef 2 volant à proximité du premier aéronef. Ceci permet de réduire avantageusement la durée écoulée entre l'instant auquel le module de diagnostic T détecte la situation catastrophique et le moment ou les données collectées par l'enregistreur de vol commencent à être émises par les moyens de communications A. Or, la réduction de cette durée peut revêtir une importance capitale, surtout si la situation catastrophique conduit à la perte de l'aéronef, que le volume des données collectées par l'enregistreur de vol est grand: les données volumineuses collectées par l'enregistreur de vol risquent alors d'être détruites avant leur transmission complète.

### Mode de réalisation en réseau d'antennes

Dans un mode de réalisation, l'émetteur A comprend une pluralité d'antennes A1-An formant un réseau illustré sur la **figure 1**. Chacune des antennes Ai de ce réseau est commutable, c'est-à-dire qu'elle peut être activée ou désactivée indépendamment des autres antennes du réseau par le module de contrôle C.

Chaque antenne activée émet un signal radioélectrique, l'ensemble des signaux radioélectriques formant ainsi le faisceau radioélectrique F1, F2.

La pluralité d'antennes A1-An est reliée à l'enregistreur de vol B via un système radio (non-illustré) adapté pour convertir un flux de données binaires enregistrées par l'enregistreur de vol B en une pluralité de signaux radioélectriques (un par antenne). Ce système radio peut ainsi comprendre des étages de base, modulation, passage en haute fréquence, filtrage et/ou amplification. Chaque antenne Ai peut-être omnidirectionnelle. Dans ce cas, les faisceaux directifs sont formés électroniquement en appliquant un jeu de gains complexes aux signaux destinés à alimenter le tableau d'antennes (on parle d'antennes adaptatives ou intelligentes). Les antennes intelligentes peuvent détecter et pister la position de l'aéronef destinataire. Elles peuvent aussi élargir ou rétrécir le faisceau d'ondes envoyé, en accroître ou en diminuer la puissance et le multiplier afin d'atteindre des destinataires multiples (si N est le nombre d'antennes utilisées, on estime en pratique qu'on peut former N/2 faisceaux simultanés distincts (donc susceptibles d'atteindre N/2 destinataires différents) partageant la même ressource radioélectrique (c'est-à-dire le même canal fréquentiel).

Dans le cas où le paramètre testé au cours de l'étape 300 n'indique pas un état critique de l'aéronef, le faisceau radioélectrique émis au cours de l'étape 600 est généré par une pluralité d'antennes par exemple toutes les antennes A1-An. Le faisceau ainsi produit est ainsi un faisceau directionnel.

Dans le cas où le paramètre testé au cours de l'étape 300 indique un état critique de l'aéronef, un sous-ensemble d'antennes est activé, par exemple une seule si l'on souhaite émettre un faisceau de façon omnidirectionnelle.

Par ailleurs, dans le cas où le paramètre testé au cours de l'étape 300 indique un état critique de l'aéronef, différentes stratégies de transmission des données enregistrées par la boîte noire peuvent être envisagées.

Selon une première stratégie, les données de boîte noire sont répliquées pour chacune des antennes activées. Le signal radioélectrique émis par chaque antenne activée transporte ainsi une copie des mêmes données collectées par la boîte noire.

Cette première stratégie apporte de la redondance dans les données transmises ; un aéronef recevant ces données redondantes peut ainsi mettre en oeuvre des traitements comportant des comparaisons et/ou des combinaisons effectuées sur les différentes copies de données reçues afin de produire une copie unique, caractérisée par un rapport signal-sur-bruit plus élevé que celui de chacune des copies reçues considérées isolément, de sorte que le niveau de dégradation des données transmises dû au canal de transmission sera réduit. Pour un canal de transmission gaussien, un gain de réception au plus égal à 10 log₁₀(N) peut être obtenu, N étant le nombre de copies émises pour les mêmes données.

Selon une seconde stratégie alternative à la première stratégie, les données de boîte noire sont décomposées en plusieurs flux de données, chaque flux étant assigné à l'une des antennes activées. Chaque antenne activée émet ainsi un signal radioélectrique transportant le flux de données qui lui a été assigné. Dans cette stratégie, les différentes antennes activées ne transportent pas les mêmes données simultanément ; en d'autres termes, le faisceau radioélectrique est dans ce cas formé par plusieurs signaux radioélectriques qui transportent chacun des données spécifiques.

La décomposition peut typiquement comprendre un démultiplexage des données pour obtenir les différents flux à assigner aux antennes activées.

Avec la seconde stratégie basée sur une décomposition des données, l'énergie transmise par bit est accrue par rapport à la première stratégie. En effet, si l'on souhaite par exemple décomposer un flux binaire constant, cadencé à 1 Mbit/s, en 10 sous-flux, chacun des sous-flux obtenus sera cadencé à 100 kbit/s. La période bit T augmente donc: elle passe de 1 us par bit à 10 us. Si la puissance P avec laquelle un sous-flux est émis est la même que celle utilisée pour émettre le flux initial (et si le schéma de modulation utilisé pour moduler le sous-flux est le même) alors l'énergie transmise par bit (=P*T) augmente d'un facteur 10.

Ainsi, à énergie totale émise constante, la transmission porte beaucoup plus loin ; et à distance de transmission constante, le taux d'erreur binaire est amélioré.

Les antennes activées peuvent être configurées pour émettre dans des canaux fréquentiels différents (c'est-à-dire émettre des signaux radioélectriques ayant des gammes de fréquences différentes), ce qui permet de paralléliser l'envoi des données par les différentes antennes actives tout en permettant de discriminer les données côté réception. Dans ce cas, un signal préliminaire en bande de base est généré par l'aéronef, puis ce signal en bande de base est transposé en fréquence et module différentes porteuses de façon à obtenir les différents signaux radioélectriques émis dans des canaux fréquentiels différents.

Les deux modes de transmission décrits (associés respectivement à la présence d'un état critique ou non) peuvent alors être mis en oeuvre au moyen du même réseau d'antennes Ai de façon très simple, sans requérir d'équipement de transmission dédié à l'un ou l'autre de ces modes, et la bascule d'un mode à l'autre peut être effectuée très rapidement par simple commutation (activation ou désactivation) de certaines des antennes A1-An.

Un en-tête spécifique (l'équivalent d'un « mayday » numérique) peut en outre être inclus dans le signal émis pour indiquer les caractères urgent et prioritaire de l'émission.

Dans les deux cas de figure décrits (état critique ou non), les données à transmettre peuvent être chiffrées (de préférence au moyen d'un chiffrement de type PKI) afin de préserver leur confidentialité.

L'aéronef 1 étant susceptible de rencontrer plusieurs aéronefs 2 sur sa route, les données qu'il a transmises au moyen des étapes décrites sont susceptibles d'être fragmentées. Afin de pouvoir recouper et assembler ces données fragmentées (typiquement par une station au sol), un en-tête peut avantageusement être incorporé aux données émises, indiquant notamment l'heure au moment de l'émission (temps universel coordonné), l'identité de l'aéronef émetteur, celle de l'aéronef récepteur et celle du précédent aéronef croisé.

Les données transmises de l'aéronef 1 à l'aéronef 2 peuvent être celles collectées par l'enregistreur de vol B durant un intervalle temporel correspondant à la durée écoulée depuis le croisement de l'aéronef 1 avec un aéronef tiers non représenté sur les figures.

De la redondance peut toutefois être introduite dans les données transmises par l'aéronef 1 en transmettant, par exemple, l'intervalle temporel et un intervalle temporel précédent. Si c'est le cas, le débit binaire peut être doublé.

Dans une première variante, après son atterrissage, l'aéronef interroge un serveur local afin de s'enquérir du statut et de l'état des M aéronefs croisés durant le vol. Les données accumulées ne sont transférées au réseau qu'en cas d'incident/accident.

Dans une seconde variante, L'autorité de l'aviation peut demander et obliger en cas de besoin qu'on lui transfère les données de vol, des aéronefs qui font l'objet d'une investigation. Ces données seraient alors transférées sur un serveur de l'autorité de l'aviation civile du lieu de l'incident ou de l'accident.

### Autres modes de réalisation

Le paramètre testé au cours de l'étape 300 peut être un booléen mais peut, de façon générale, prendre plus de deux valeurs, chaque valeur étant indicative d'un niveau de défaillance respectif. Peut ainsi être fait la distinction entre des états d'avarie de faible importance et des états critiques.

Pour chaque valeur du paramètre, une directivité correspondante et/ou une puissance correspondante peut être configurée dans l'émetteur A par le module de contrôle C. Ainsi, les conditions d'émissions sont adaptées de façon fine au niveau d'importance de la ou des avaries détectées dans l'aéronef 1.

## Revendications

1. Procédé de transmission en vol de données enregistrées par une boîte noire d'un aéronef (1) vers un autre aéronef, le procédé comprend l'émission (600) par l'aéronef (1) d'un faisceau radioélectrique (F1, F2) transportant lesdites données selon une première directivité (D1) si au moins un paramètre prédéterminé n'indique pas un état critique de l'aéronef (1), et selon une deuxième directivité (D2) différente de la première directivité (D1) si le paramètre prédéterminé indique
un état critique de l'aéronef (1), le procédé **caractérisé en ce que** la deuxième directivité (D2)
est inférieure à la première directivité (D1) et **en ce que** le faisceau
radioélectrique selon la deuxième directivité (D2) est émis de façon omnidirectionnelle.

2. Procédé selon la revendication 1, dans lequel l'émission (600) du faisceau radioélectrique (F1) selon la première directivité (D1) est mise en oeuvre en réponse à la détection (401) d'une position d'un autre aéronef (2) en vol à portée radioélectrique, le faisceau radioélectrique (F1) émis étant alors orienté (403) vers la position détectée.

3. Procédé selon l'une des revendications 1 à 2, dans lequel l'émission (600) du faisceau radioélectrique (F2) selon la deuxième directivité (D2) est répétée.

4. Procédé selon l'une des revendications 1 à 3, dans lequel le faisceau radio (F1) est émis selon une première puissance (P1) si le paramètre n'indique pas un état critique, et selon une deuxième puissance (P2) supérieure à la première puissance (P1) si le paramètre indique un état critique.

5. Procédé selon l'une des revendications 1 à 4, dans lequel le paramètre prédéterminé est émis dans le faisceau radioélectrique (F1, F2).

6. Procédé selon l'une des revendications 1 à 5, dans lequel le faisceau radioélectrique (F1, F2) émis est généré par :
- activation d'un ensemble d'antennes (A1-An) de l'aéronef, si le paramètre n'indique pas un état critique de l'aéronef, et
- activation sélective d'un sous-ensemble (Ai) de l'ensemble d'antennes, si le paramètre indique un état critique l'aéronef.

7. Procédé selon la revendication 6, dans lequel chaque antenne est une antenne omnidirectionnelle.

8. Procédé selon l'une des revendications 1 à 7, comprenant l'activation d'une pluralité d'antennes de l'aéronef, chaque antenne générant un signal radioélectrique transportant une copie des données enregistrées par la boîte noire si le paramètre indique un état critique l'aéronef.

9. Procédé selon l'une des revendications 1 à 8, comprenant une décomposition des données enregistrées par la boîte noire en plusieurs flux de données, et l'activation d'une pluralité d'antennes de l'aéronef, chaque antenne générant un signal radioélectrique transportant l'un des flux de données si le paramètre indique un état critique l'aéronef.

10. Procédé selon l'une des revendications 8 et 9, dans lequel chaque signal radioélectrique est émis dans un canal fréquentiel distinct.

11. Système de transmission pour aéronef (1) comprenant :
- un enregistreur de vol de type boîte noire (B),
- un émetteur (A) d'un faisceau radioélectrique transportant des données collectées par l'enregistreur de vol (B),
- un module de diagnostic (T) configuré pour déterminer au moins un paramètre indiquant ou non un état critique de l'aéronef (1),
le système étant **caractérisé en ce qu'**il comprend en outre:
- un module de contrôle (C) configuré pour ajuster la directivité de l'émetteur (A) en fonction du paramètre déterminé, de sorte que le faisceau radioélectrique soit émis par l'émetteur selon une première
directivité (D1) si le paramètre prédéterminé n'indique pas un état critique de l'aéronef (1), et selon une deuxième directivité (D2) différente de la première directivité (D1) si le paramètre prédéterminé indique un état critique de l'aéronef (1), dans lequel la deuxième directivité (D2) est inférieure à la première
directivité (D1) et dans lequel le faisceau radioélectrique selon la deuxième directivité (D2) est émis de façon omnidirectionnelle.

12. Système selon la revendication 11, dans lequel l'émetteur (A) comprend une pluralité d'antennes omnidirectionnelles (A1-An), et le module de contrôle (C) est configuré pour :
- activer la pluralité d'antennes (Ai-An) si le paramètre n'indique pas un état critique de l'aéronef, et
- activer sélectivement un sous-ensemble (Ai) de la pluralité d'antennes si le paramètre indique un état critique de l'aéronef.

13. Système selon la revendication 12, dans lequel le sous-ensemble est constitué d'une unique antenne omnidirectionnelle.

## Patentansprüche

1. Verfahren zum Übertragen, während des Flugs, von durch eine Black Box eines Luftfahrzeugs (1) gespeicherten Daten zu einem anderen Luftfahrzeug, wobei das Verfahren das Senden (600) durch das Luftfahrzeug (1) eines Funkstrahls (F1, F2) umfasst, der die Daten entsprechend einer ersten Richtwirkung (D1) transportiert, wenn mindestens ein vorbestimmter Parameter keinen kritischen Zustand des Luftfahrzeugs (1) anzeigt, und entsprechend einer zweiten, zur ersten Richtwirkung (D1) unterschiedlichen Richtwirkung (D2), wenn der vorbestimmte Parameter einen kritischen Zustand des Luftfahrzeugs (1) anzeigt, wobei das Verfahren **dadurch gekennzeichnet ist, dass** die zweite Richtwirkung (D2) geringer ist, als die erste Richtwirkung (D1), und dadurch, dass der Funkstrahl entsprechend der zweiten Richtwirkung (D2) rundstrahlend gesendet wird.

2. Verfahren nach Anspruch 1, wobei das Senden (600) des Funkstrahls (F1) entsprechend der ersten Richtwirkung (D1) als Reaktion auf die Erfassung (401) einer Position eines anderen Luftfahrzeugs (2) auf Funkreichweite während des Flugs ausgeführt wird, wobei der gesendete Funkstrahl (F1) zur erfassten Position ausgerichtet (403) wird.

3. Verfahren nach einem der Ansprüche 1 bis 2, wobei das Senden (600) des Funkstrahls (F2) entsprechend der zweiten Richtwirkung (D2) wiederholt wird.

4. Verfahren nach einem der Ansprüche 1 bis 3, wobei der Funkstrahl (F1) entsprechend einer ersten Leistung (P1) gesendet wird, wenn der Parameter keinen kritischen Zustand anzeigt, und entsprechend einer zweiten Leistung (P2), höher als die erste Leistung (P1), wenn der Parameter einen kritischen Zustand anzeigt.

5. Verfahren nach einem der Ansprüche 1 bis 4, wobei der vorbestimmte Parameter in dem Funkstrahl (F1, F2) gesendet wird.

6. Verfahren nach einem der Ansprüche 1 bis 5, wobei der gesendete Funkstrahl (F1, F2) erzeugt wird durch:
- Aktivieren einer Einheit von Antennen (A1-An) des Luftfahrzeugs, wenn der Parameter keinen kritischen Zustand des Luftfahrzeugs anzeigt, und
- selektives Aktivieren einer Untereinheit (Ai) der Einheit von Antennen, wenn der Parameter einen kritischen Zustand des Luftfahrzeugs anzeigt.

7. Verfahren nach Anspruch 6, wobei jede Antenne eine Rundstrahlantenne ist.

8. Verfahren nach einem der Ansprüche 1 bis 7, umfassend das Aktivieren einer Vielzahl von Antennen des Luftfahrzeugs, wobei jede Antenne ein Funksignal erzeugt, das eine Kopie der durch die Black Box gespeicherten Daten transportiert, wenn der Parameter einen kritischen Zustand des Luftfahrzeugs anzeigt.

9. Verfahren nach einem der Ansprüche 1 bis 8, umfassend eine Aufspaltung der durch die Black Box gespeicherten Daten in mehrere Datenströme, und das Aktivieren einer Vielzahl von Antennen des Luftfahrzeugs, wobei jede Antenne ein Funksignal erzeugt, das einen der Datenströme transportiert, wenn der Parameter einen kritischen Zustand des Luftfahrzeugs anzeigt.

10. Verfahren nach einem der Ansprüche 8 und 9, wobei jedes Funksignal in einem unterschiedlichen Frequenzkanal gesendet wird.

11. Übertragungssystem für ein Luftfahrzeug (1), umfassend:
- einen Flugschreiber der Art Black Box (B),
- einen Sender (A) eines Funkstrahls, der von dem Flugschreiber (B) gesammelte Daten transportiert,
- ein Diagnosemodul (T), konfiguriert, um mindestens einen Parameter zu bestimmen, der einen kritischen Zustand des Luftfahrzeugs (1) anzeigt oder nicht, wobei das System **dadurch gekennzeichnet ist, dass** es weiter umfasst:
- ein Kontrollmodul (C), konfiguriert, um die Richtwirkung des Senders (A) in Abhängigkeit von dem bestimmten Parameter anzupassen, damit der Funkstrahl durch den Sender entsprechend einer ersten Richtwirkung (D1) gesendet wird, wenn der vorbestimmte Parameter keinen kritischen Zustand des Luftfahrzeugs (1) anzeigt, und entsprechend einer zweiten, zur ersten Richtwirkung (D1) unterschiedlichen Richtwirkung (D2), wenn der vorbestimmte Parameter einen kritischen Zustand des Luftfahrzeugs (1) anzeigt, wobei die zweite Richtwirkung (D2) geringer ist, als die erste Richtwirkung (D1), und wobei der Funkstrahl entsprechend der zweiten Richtwirkung (D2) rundstrahlend gesendet wird.

12. System nach Anspruch 11, wobei der Sender (A) eine Vielzahl von Rundstrahlantennen (A1-An) umfasst und das Kontrollmodul (C) konfiguriert ist, zum:
- Aktivieren der Vielzahl von Antennen (A1-An), wenn der Parameter keinen kritischen Zustand des Luftfahrzeugs anzeigt, und
- selektiven Aktivieren einer Untereinheit (Ai) der Vielzahl von Antennen, wenn der Parameter einen kritischen Zustand des Luftfahrzeugs anzeigt.

13. System nach Anspruch 12, wobei die Untereinheit aus einer einzigen Rundstrahlantenne gebildet wird.

## Claims

1. Method for transmitting in flight data recorded by a black box of an aircraft (1), the method comprising emitting (600) by the aircraft (1) a radioelectric beam (F1, F2) conveying said data along a first directivity (D1) if at least one predetermined parameter does not indicate a critical condition of the aircraft (1), and along a second directivity (D2) different from the first directivity (D1) if the predetermined parameter indicates a critical condition of the aircraft (1), the method being **characterized in that** the second directivity (D2) is smaller than the first directivity (D1) and **in that** the radioelectric beam along the second directivity (D2) is emitted in an omnidirectional way.

2. Method according to claim 1, wherein emitting (600) the radioelectric beam (F1) along the first directivity (D1) is applied in response to detecting (401) a position of another aircraft (2) in flight within radioelectric range, the emitted radioelectric beam (F1) then being oriented (403) towards the detected position.

3. Method according to one of claims 1 to 2, wherein emitting (600) the radioelectric beam (F2) along the second directivity (D2) is repeated.

4. Method according to one of claims 1 to 3, wherein the radioelectric beam (F1) is emitted according to a first power (P1) if the parameter does not indicate a critical condition, and according to a second power (P2) greater than the first power (P1) if the parameter indicates a critical condition.

5. Method according to one of claims 1 to 4, wherein the determined parameter is emitted in the radioelectric beam (F1, F2).

6. Method according to one of claims 1 to 5, wherein the emitted radioelectric beam (F1, F2) is generated by:
- activating a set of antennas (A1-An) of the aircraft, if the parameter does not indicate a critical condition of the aircraft, and
- selectively activating a sub-set (Ai) of the set of antennas, if the parameter indicates a critical condition of the aircraft.

7. Method according to claim 6, wherein each antenna is an omnidirectional antenna.

8. Method according to one of claims 1 to 7, comprising activating a plurality of antennas of the aircraft, each antenna generating a radioelectric signal conveying a copy of the data recorded by the black box if the parameter indicates a critical condition of the aircraft.

9. Method according to one of claims 1 to 8, comprising splitting the data recorded by the black box into several data flows, and activating a plurality of antennas of the aircraft, wherein each antenna generates a radioelectric signal conveying one of the data flows if the parameter indicates a critical condition of the aircraft.

10. Method according to one of claims 8 and 9, wherein each radioelectric signal is emitted in a distinct frequency channel.

11. Transmission system for an aircraft (1) comprising:
- a flight recorder of the black box type (B),
- an emitter (A) of a radioelectric beam conveying data collected by the flight recorder (B),
- a diagnostic module (T) configured for determining at least one parameter either indicating or not a critical condition of the aircraft (1), the system being **characterized in that** it further comprises:
- a control module (C) configured for adjusting the directivity of the emitter (A) according to the determined parameter, in such a way that the radioelectric beam is transmitted by the transmitter along a first directivity (D1) if the predetermined parameter does not indicate a critical condition of the aircraft (1), and along a second directivity (D2) different from the first directivity (D1) if the predetermined parameter indicates a critical condition of the aircraft (1), wherein the second directivity (D2) is smaller than the first directivity (D1) and wherein the radioelectric beam along the second directivity (D2) is emitted in an omnidirectional way.

12. System according to claim 11, wherein the emitter (A) comprises a plurality of omnidirectional antennas (A1-An), and the control module (C) is configured for:
- activating the plurality of antennas (Ai-An) if the parameter does not indicate a critical condition of the aircraft, and
- selectively activating a sub-set (Ai) of the plurality of antennas if the parameter indicates a critical condition of the aircraft.

13. System according to claim 12, wherein the sub-set consists of a single omnidirectional antenna.
